**Europäisches Patentamt**

**European Patent Office**

**Office européen des brevets**

(19)

(11) Veröffentlichungsnummer: **0 071 566**
**B1**

# (12) EUROPÄISCHE PATENTSCHRIFT

(45) Veröffentlichungstag der Patentschrift:
**19.02.86**

(51) Int. Cl.⁴: **B 60 C 27/10**

(21) Anmeldenummer: **82730099.7**

(22) Anmeldetag: **23.07.82**

(54) **Verschluss für Reifenketten.**

(30) Priorität: **24.07.81 DE 3129907**

(43) Veröffentlichungstag der Anmeldung:
**09.02.83 Patentblatt 83/6**

(45) Bekanntmachung des Hinweises auf die Patenterteilung:
**19.02.86 Patentblatt 86/8**

(84) Benannte Vertragsstaaten:
**AT CH DE FR GB IT LI NL SE**

(56) Entgegenhaltungen:
**DE - A - 2 702 948
DE - A - 2 748 249
FR - A - 2 490 159
US - A - 1 494 289**

(73) Patentinhaber: **RUD-Kettenfabrik Rieger & Dietz GmbH u. Co., Friedensinsel, D-7080 Aalen 1 (DE)**

(72) Erfinder: **Hofmann, Peter, Heulenbergweg 76, D-7080 Aalen-Unterkochen (DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Verschluss für Reifenketten, insbesondere Gleitschutzketten, mit einem Grundkörper mit mindestens einer Anschlussöse für das Endglied eines Haltestranges und mit einer eine elastische Einlage aufweisenden Durchziehöffnung für einen Spannkettenstrang sowie einem sich an die Durchziehöffnung anschliessenden Arretierungsschlitz zur Arretierung des Spannkettenstranges.

Bekannt ist ein Verschluss der vorstehenden Art aus der Druckschrift DE-A-2 748 249, der aus einem einfachen gestanzten Bauteil besteht, das eine zentrale kreisförmige Durchziehöffnung und einen sich hieran anschliessenden Arretierungsschlitz aufweist. Die elastische Einlage hat bei diesem Verschluss die Aufgabe, das Gleiten der Kettenglieder durch die Durchziehöffnung zu erleichtern. Der bekannte Verschluss vermag insofern nicht zu befriedigen, als die Kettenglieder des Spannkettenstranges beim Durchziehen durch die Durchziehöffnung dazu neigen, sich im Bereich der Mündung des Arretierungsschlitzes zu verhaken und eine vergleichsweise grosse Gefahr besteht, dass das jeweils in den Arretierungsschlitz eingehängte Kettenglied sich ungewollt löst.

Der Erfindung liegt die Aufgabe zugrunde, einen Verschluss der in Betracht gezogenen Art zu schaffen, bei dem ein Spannkettenstrang ohne Festhaken seiner Kettenglieder durch die Durchziehöffnung gezogen werden kann und bei der die Gewähr für einen guten Halt des jeweils in den Arretierungsschlitz eingehängten Kettengliedes gegeben ist.

Diese Aufgabe wird erfindungsgemäss dadurch gelöst, dass die den Grundkörper beidseits mit Halteschultern übergreifende Einlage mindestens einen die Mündung des Arretierungsschlitzes verengenden Rastnocken zur elastischen Verriegelung eines unter Überwindung des Rastnockens in den Arretierungsschlitz eingeführten Schenkels eines Kettengliedes des Spannkettenstranges bildet.

Der erfindungsgemässe Verschluss bietet den Vorteil, dass die Verengung des Arretierungsschlitzes im Mündungsbereich einerseits ein Verhaken des Spannkettenstranges im Arretierungsschlitz beim Durchziehen durch die Durchziehöffnung verhindert und andererseits die Gewähr für einen guten Halt eines in den Arretierungsschlitz eingehängten Schenkels eines Kettengliedes des Spannkettenstranges bietet. Der Rastnocken übt mit anderen Worten eine doppelte Funktion aus. Die elastische Einlage erleichtert zudem das Durchziehen des Spannkettenstranges durch die Durchziehöffnung auch dadurch, dass sie mit ihren Halteschultern die Auflagefläche für die Kettenglieder des Spannkettenstranges vergrössert.

Weitere Merkmale und Einzelheiten der Erfindung ergeben sich aus den Unteransprüchen und der nachfolgenden Beschreibung eines in der beigefügten Zeichnung dargestellten Ausführungsbeispieles. Es zeigen:

Figur 1 die perspektivische Ansicht eines an einer Reifenkette angeordneten Verschlusses;

Figur 2 die Draufsicht auf den Verschluss;

Figur 3 einen Schnitt längs der Linie III-III in Figur 2;

Figur 4 einen Schnitt längs der Linie IV-IV in Figur 2;

Figur 5 die Draufsicht auf einen Grundkörper eines Verschlusses mit einer modifizierten Einlage;

Figur 6 den mit einer Einlage versehenen Grundkörper gemäss Figur 5 und

Figur 7 die Seitenansicht des Verschlusses gemäss Figur 6.

Der Verschluss besteht aus einem von einem Stanzteil gebildeten Grundkörper 1, welcher mit einer Durchziehöffnung 2 und einem sich hieran anschliessenden Arretierungsschlitz 3 versehen ist. An einem Ende ist der Grundkörper 1 mit einer hakenförmigen Anschlussöse 4 und am anderen Ende mit einer ringförmigen Anschlussöse 5 für Endglieder 6 und 7 eines Haltestranges 8 versehen. In den Verschluss ist ein Kettenglied 9 eines Spannkettenstranges 10 eingehängt. Die Kettenglieder 9 des Spannkettenstranges haben Schenkel, deren Stärke gleich d ist.

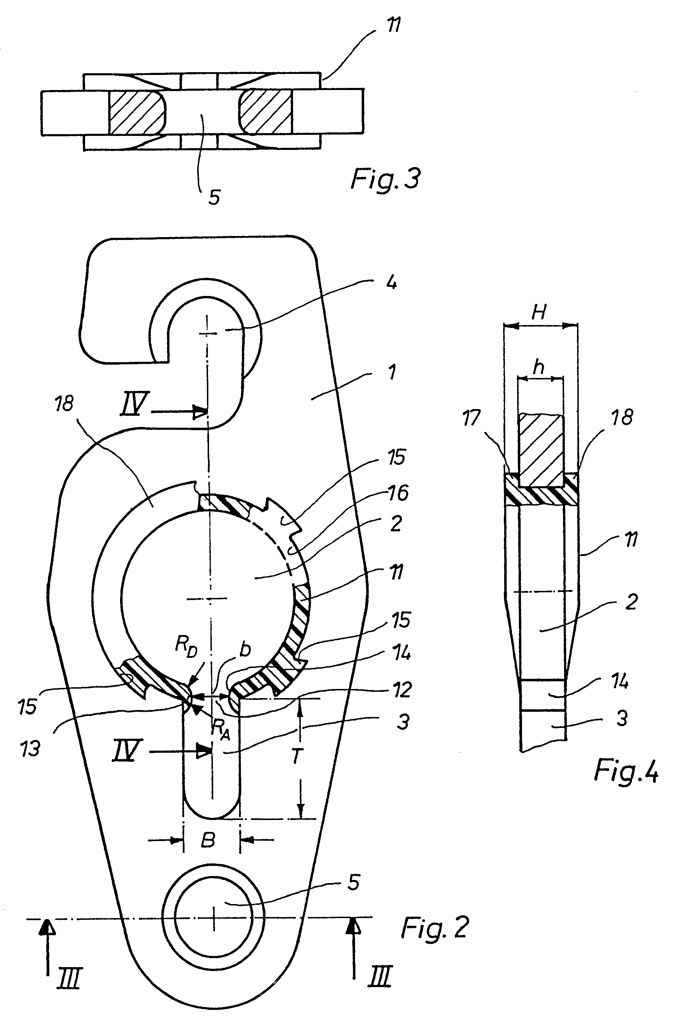

Einzelheiten des Verschlusses ergeben sich aus den Figuren 2 bis 3. Man erkennt, dass die Durchziehöffnung 2 mit einer elastischen Einlage 11 ausgefüttert ist, die in den Bereich der Mündung 12 des Arretierungsschlitzes 3 vorspringende Rastnocken 13 und 14 bildet.

In der Praxis wird die Einlage 11 von einem in die Durchstecköffnung 2 eingespritzten mit einem Schlitz versehenen Ring gebildet. Sie besteht aus einem Niederdruck-Polyäthylen grosser Verschleissfestigkeit. Die Einlage sollte sich farblich vom Grundkörper abheben. Zweckmässigerweise besteht sie aus einem reflektierenden oder fluoreszierenden Material.

Um sicherzustellen, dass die Einlage 11 drehfest im Grundkörper 1 des Verschlusses verankert ist, ist der von einem Stanzteil gebildete Grundkörper 1 mit mehreren Rastnuten für die Einlage 11 versehen. Gebildet werden die Rastnuten von schwalbenschwanzförmigen Randausstanzungen 15 der Aufnahme 16 für die Einlage 11. Die Aufnahme 16 weist im dargestellten Fall vier Rastnuten auf, von denen mindestens zwei in der Nähe der Mündung 12 des Arretierungsschlitzes 3 angeordnet sind.

Um die Einlage 11 auch gegen Verschiebungen senkrecht zur Ebene des Grundkörpers 1 zu sichern, ist sie mit den Grundkörper beidseits übergreifenden Halteschultern 17 und 18 versehen, die flanschartig ausgebildet sind. Die Breite b des Arretierungsschlitzes 3 im Rastnockenbereich ist etwa gleich der 0,9-fachen Stärke d der Schenkel der Kettenglieder 9 des Spannkettenstranges 10. Die Tiefe des Arretierungsschlitzes 3 ist dagegen gleich der 2–2,5-fachen Stärke d der Schenkel der Kettenglieder 9 des Spannkettenstranges 10.

Durch die Wahl der genannten Schlitztiefe wird erreicht, dass nur ein Schenkel des jeweiligen Kettengliedes 9 gesperrt wird. Würden beide Schenkel gesperrt, d.h. wäre die Tiefe T wesentlich grösser, so würde das Lösen des Spannkettenstranges in unerwünschter Weise erschwert. Die Breite B des Arretierungsschlitzes 3 ist ausserhalb des Bereiches der Rastnocken 13 und 14 etwa gleich der 1,2–1,4-fachen Stärke d der Schenkel der Kettenglieder 9 des Spannkettenstranges 10. Aufmerksamkeit verdienen auch die Krümmungsradien $R_A$ und $R_D$ der Rastnocken 13 und 14. Der dem Grund des Arretierungsschlitzes 3 zugewandte Krümmungsradius $R_A$ der Rastnocken 13 und 14 sollte grösser sein als der der Durchziehöffnung 2 zugewandte Krümmungsradius $R_D$. Zweckmässig ist es, wenn der Krümmungsradius $R_A$ gleich der halben Stärke d der Kettenglieder 9 und der der Durchziehöffnung 2 zugewandte Krümmungsradius $R_D$ gleich einem Drittel der Stärke d der Schenkel der Kettenglieder 9 des Spannkettenstranges 10 ist.

Die Höhe H der Einlage 11 sollte mindestens 1,3 mal so gross wie die Höhe h des Grundkörpers 1 sein. Diese wiederum ist vorteilhafterweise gleich der Stärke d der Schenkel der Kettenglieder 9 des Spannkettenstranges 10. Besonders vorteilhaft ist es, wenn die grösste Höhe H, d.h. die Höhe, die ausserhalb des Mündungsbereiches gelegenen Teils der Einlage 1,5 bis 2 d beträgt. Im Bereich der Mündung 12 des Arretierungsschlitzes 13 ist die Einlage zum Grundkörper hin abgeflacht, wie dies am besten aus Fig. 4 erkennbar ist.

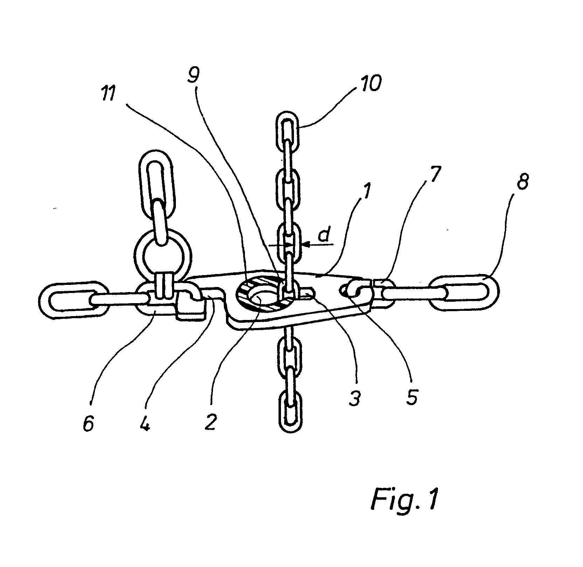

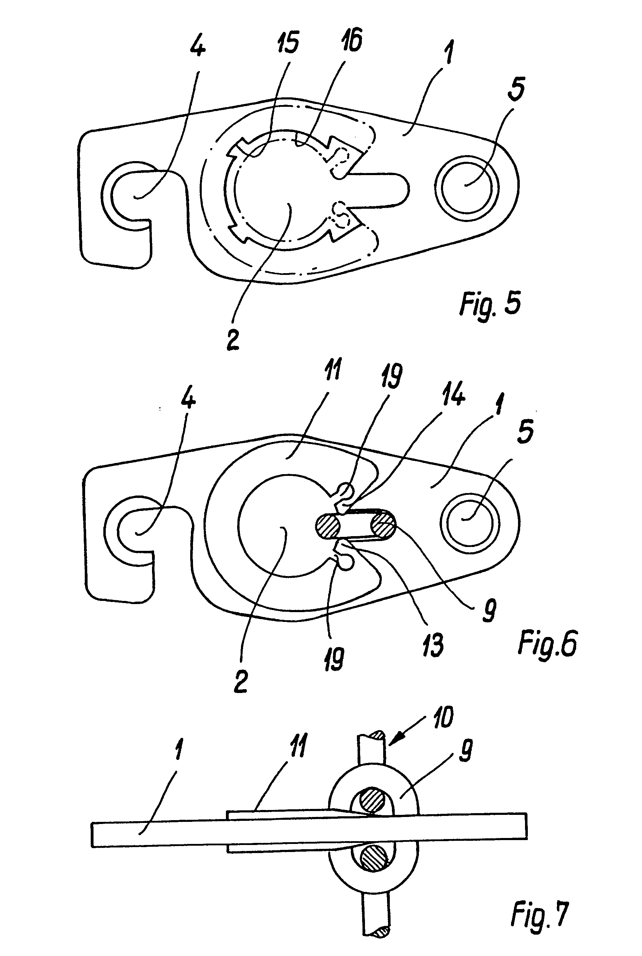

Ein abgewandelter Verschluss ist in den Figuren 5 bis 7 dargestellt, in denen Teile, die Teilen des ersten Ausführungsbeispiels entsprechen, die gleichen Bezugszeichen wie in den Figuren 1 bis 4 tragen. Beim zweiten Ausführungsbeispiel liegen zwei vergleichsweise grosse Randausstanzungen 15 in unmittelbarer Nähe des Arretierungsschlitzes 3. Hierdurch erhält man die Möglichkeit, die Einlage 11 im Bereich der Mündung 12 mit Ausweichkerben 19 für die Rastnocken 13, 14 zu versehen. Die Rastnocken 13, 14 bilden so gewissermassen die Enden kurzer Blattfedern. Die erzielte Federwirkung gestattet es, die Einlage aus einem Material vergleichsweise grosser Härte herzustellen.

Der beschriebene Verschluss zeichnet sich nicht nur durch seine gute Funktionsweise sondern auch durch seine Einfachheit und kostengünstige Herstellbarkeit aus. Er lässt sich mit geringem Aufwand in grossen Stückzahlen fertigen. Durch die Wahl eines geeigneten Materials für die Einlage 11 lassen sich die Reibungsverhältnisse zwischen dem Spannkettenstrang 10 und dem Verschluss in einer Weise günstig beeinflussen, die das Durchziehen des Spannkettenstranges durch die Durchziehöffnung 2 erleichtert.

**Patentansprüche**

1. Verschluss für Reifenketten, insbesondere Gleitschutzketten, mit einem Grundkörper (1) mit mindestens einer Anschlussöse (4, 5) für das Endglied (6, 7) eines Haltestranges (8) und mit einer eine elastische Einlage (11) aufweisenden Durchziehöffnung (2) für einen Spannkettenstrang (10) sowie einem sich an diese Durchziehöffnung anschliessenden Arretierungsschlitz (3) zur Arretierung des Spannkettenstranges, dadurch gekennzeichnet, dass die den Grundkörper (1) beidseits mit Halteschultern (17, 18) übergreifende Einlage (11) mindestens einen die Mündung (12) des Arretierungsschlitzes (3) verengenden Rastnocken (13, 14) zur elastischen Verriegelung eines unter Überwindung des Rastnockens (13, 14) in den Arretierungsschlitz (3) eingeführten Schenkels eines Kettengliedes (9) des Spannkettenstranges (10) bildet.

2. Verschluss nach Anspruch 1, dadurch gekennzeichnet, dass die Einlage (11) von einem in die Durchziehöffnung (2) eingespritzten mit einem Schlitz versehenen Ring gebildet wird.

3. Verschluss nach Anspruch 1 oder 2, dadurch gekennzeichnet, dass die Einlage (11) aus Niederdruck-Polyäthylen besteht.

4. Verschluss nach einem der Ansprüche 1 bis 3, dadurch gekennzeichnet, dass die Einlage (11) drehfest im Grundkörper (1) des Verschlusses verankert ist.

5. Verschluss nach Anspruch 4, dadurch gekennzeichnet, dass der Grundkörper (1) von einem Stanzteil gebildet wird, das mit Rastnuten für die Einlage (11) versehen ist.

6. Verschluss nach Anspruch 5, dadurch gekennzeichnet, dass die Rastnuten von schwalbenschwanzförmigen Randausstanzungen (15) der Aufnahme (16) für die Einlage (11) gebildet werden.

7. Verschluss nach Anspruch 5 oder 6, dadurch gekennzeichnet, dass die Aufnahme (16) mindestens zwei Rastnuten aufweist.

8. Verschluss nach Anspruch 7, dadurch gekennzeichnet, dass zwei Rastnuten in der Nähe der Mündung (12) des Arretierungsschlitzes (3) angeordnet sind.

9. Verschluss nach einem der Ansprüche 1 bis 8, dadurch gekennzeichnet, dass die Halteschultern (17, 18) flanschartig ausgebildet sind.

10. Verschluss nach einem der Ansprüche 1 bis 9, dadurch gekennzeichnet, dass die Breite (b) des Arretierungsschlitzes (3) im Rastnockenbereich etwa gleich der 0,9-fachen Stärke (d) der Schenkel der Kettenglieder (9) des Spannkettenstranges (10) ist.

11. Verschluss nach einem der Ansprüche 1 bis 10, dadurch gekennzeichnet, dass die Tiefe (T) des Arretierungsschlitzes (3) gleich der 2- bis 2,5-fachen Stärke (d) der Schenkel der Kettenglieder (9) des Spannkettenstranges (10) ist.

12. Verschluss nach einem der Ansprüche 1 bis 11, dadurch gekennzeichnet, dass die Breite (B) des Arretierungsschlitzes (3) ausserhalb des Rastnockenbereiches etwa gleich der 1,2- bis 1,4-fachen Stärke (d) der Schenkel der Kettenglieder (9) des Spannkettenstranges (10) ist.

13. Verschluss nach einem der Ansprüche 1 bis 12, dadurch gekennzeichnet, dass der dem Grund des Arretierungsschlitzes (3) zugewandte Krümmungsradius ($R_A$) der Rastnocken (13, 14) grösser als deren der Durchziehöffnung (2) zugewandter Krümmungsradius ($R_D$) ist.

14. Verschluss nach Anspruch 13, dadurch gekennzeichnet, dass der dem Grund des Arretierungsschlitzes (3) zugewandte Krümmungsradius ($R_A$) gleich der halben Stärke (d) und der der Durchziehöffnung (2) zugewandter Krümmungsradius ($R_D$) gleich einem Drittel der Stärke (d) der Schenkel der Kettenglieder (9) des Spannkettenstranges (10) ist.

15. Verschluss nach einem der Ansprüche 1 bis 14, dadurch gekennzeichnet, dass die grösste Höhe (H) der Einlage (11) etwa gleich der 1,3-fachen Höhe (h) des Grundkörpers (1) des Verschlusses ist.

16. Verschluss nach Anspruch 15, dadurch gekennzeichnet, dass die Höhe (h) des Grundkörpers (1) gleich der Stärke (d) der Schenkel der Kettenglieder (9) des Spannkettenstranges (10) ist.

17. Verschluss nach Anspruch 15 oder 16, dadurch gekennzeichnet, dass die Höhe (H) der Einlage (11) zur Mündung (12) des Arretierungsschlitzes (3) hin abnimmt.

18. Verschluss nach einem der Ansprüche 1 bis 14, dadurch gekennzeichnet, dass die grösste Höhe (H) der Einlage (11) mindestens gleich der eineinhalbfachen und höchstens gleich der zweifachen Stärke (d) der Schenkel der Kettenglieder (9) des Spannkettenstranges ist.

19. Verschluss nach einem der Ansprüche 1 bis 18, dadurch gekennzeichnet, dass die Einlage (11) im Bereich der Mündung (12) des Arretierungsschlitzes (3) mit Ausweichkerben (19) für die Rastnocken (13, 14) versehen ist.

20. Verschluss nach einem der Ansprüche 1 bis 19, dadurch gekennzeichnet, dass die Einlage (11) eine sich von der Farbe des Grundkörpers (3) abhebende Farbe hat.

21. Verschluss nach Anspruch 20, dadurch gekennzeichnet, dass die Einlage (11) reflektierend ausgebildet ist.

22. Verschluss nach einem der Ansprüche 1 bis 20, dadurch gekennzeichnet, dass die Einlage (11) fluoreszierend ausgebildet ist.

## Claims

1. Fastener for tyre chains, in particular antiskid chains, having a basic body (1) having at least one connecting eye (4, 5) for the end link (6, 7) of a retaining strand (8) and having a pull-through opening (2) for a tension chain length (10), which pull-through opening (2) has an elastic insert (11), and also having a locking slot (3) for locking the tension chain length, which locking slot (3) adjoins this pull-through opening, characterised in that the insert (11) gripping over the basic body (1) on both sides with retaining shoulders (17, 18) forms at least one catch dog (13, 14) narrowing the mouth (12) of the locking slot (3), for elastically locking a side of a chain link (9) of the tension chain length (10), which side is inserted into the locking slot (3) by overcoming the catch dog (13, 14).

2. Fastener according to Claim 1, characterised in that the insert (11) is formed by a ring injected into the pull-through opening (2) and provided with a slot.

3. Fastener according to Claim 1 or 2, characterised in that the insert (11) is made of low-pressure polyethylene.

4. Fastener according to one of Claims 1 to 3, characterised in that the insert (11) is anchored in rotationally fixed manner in the basic body (1) of the fastener.

5. Fastener according to Claim 4, characterised in that the basic body (1) is formed from a stamped part which is provided with catch notches for the insert (11).

6. Fastener according to Claim 5, characterised in that the catch notches are formed by dovetailed punchings (15) of the receptacle (16) for the insert (11).

7. Fastener according to Claim 5 or 6, characterised in that the receptacle (16) has at least two catch notches.

8. Fastener according to Claim 7, characterised in that two catch notches are arranged close to the mouth (12) of the locking slot (3).

9. Fastener according to one of Claims 1 to 8, characterised in that the retaining shoulders (17, 18) are made flange-like.

10. Fastener according to one of Claims 1 to 9, characterised in that the width (b) of the locking slot (3), in the area of the catch dogs, is approximately equal to 0.9 times the thickness (d) of the sides of the chain links (9) of the tension chain length (10).

11. Fastener according to one of Claims 1 to 10, characterised in that the depth (T) of the locking slot (3) is equal to 2 to 2.5 times the thickness (d) of the sides of the chain links (9) of the tension chain length (10).

12. Fastener according to one of Claims 1 to 11, characterised in that the width (B) of the locking slot (3), outside the catch dog area, is approximately equal to 1.2 to 1.4 times the thickness (d) of the sides of the chain links (9) of the tension chain length (10).

13. Fastener according to one of Claims 1 to 12, characterised in that the radius of curvature ($R_A$) of the catch dogs (13, 14), which radius of curvature ($R_A$) is facing towards the root of the locking slot (3), is greater than their radius of curvature ($R_D$) facing towards the pull-through opening (2).

14. Fastener according to Claim 13, characterised in that the radius of curvature ($R_A$) facing towards the root of the locking slot (3) is equal to half the thickness (d) and the radius of curvature ($R_D$) facing towards the pull-through opening (2) is equal to one-third of the thickness (d) of the sides of the chain links (9) of the tension chain length (10).

15. Fastener according to one of Claims 1 to 14, characterised in that the greatest height (H) of the insert (11) is approximately equal to 1.3 times the height (h) of the basic body (1) of the fastener.

16. Fastener according to Claim 15, characterised in that the height (h) of the basic body (1) is equal to the thickness (d) of the sides of the chain links (9) of the tension chain length (10).

17. Fastener according to Claim 15 or 16, characterised in that the height (H) of the insert (11) decreases towards the mouth (12) of the locking slot (3).

18. Fastener according to one of Claims 1 to 14, characterised in that the greatest height (H) of the insert (11) is at least equal to one-and-a-half times and at most equal to two times the thickness (d) of the sides of the chain links (9) of the tension chain length.

19. Fastener according to one of Claims 1 to 18, characterised in that the insert (11), in the area of the mouth (12) of the locking slot (3), is provided with deflection notches (19) for the catch dogs (13, 14).

20. Fastener according to one of Claims 1 to 19, characterised in that the insert (11) has a colour which contrasts with the colour of the basic body (3).

21. Fastener according to Claim 20, characterised in that the insert (11) is of a reflecting design.

22. Fastener according to one of Claims 1 to 20, characterised in that the insert (11) is of a fluorescent design.

**Revendications**

1. Fermeture de chaîne pour pneus, notamment pour chaînes antidérapantes, comportant un corps de base (1) ayant au moins un oeillet de raccordement (4, 5) pour le maillon d'extrémité (6, 7) d'un tronçon de maintien (8) et un orifice de passage (2) présentant une garniture élastique (11) pour un tronçon de chaîne de tension (10) ainsi qu'une fente d'arrêt (3) se trouvant derrière l'orifice de passage pour arrêter le tronçon de chaîne de tension, caractérisée en ce que la garniture (11) recouvrant avec des épaulements (17, 18) les deux côtés du corps de base (1), forme au moins un ergot d'arrêt (13, 14) rétrécissant l'ouverture (12) de la fente d'arrêt (3) pour verrouiller élastiquement une branche de maillon de chaîne (9) du tronçon de chaîne de tension (10) introduit dans la fente d'arrêt (3) en surmontant l'ergot d'arrêt (13, 14).

2. Fermeture selon la revendication 1, caractérisée en ce que la garniture (11) est formée par une bague injectée dans l'orifice de passage (2) et pourvue d'une fente.

3. Fermeture selon la revendication 1 ou 2, caractérisée en ce que la garniture (11) est en polyéthylène à basse pression.

4. Fermeture selon une des revendications 1 à 3, caractérisée en ce que la garniture (11) est ancrée dans le corps de base (1) de la fermeture.

5. Fermeture selon la revendication 4, caractérisée en ce que le corps de base (1) est formé d'une pièce estampée pourvue de gorges d'arrêt pour la garniture (11).

6. Fermeture selon la revendication 5, caractérisée en ce que les gorges d'arrêt sont formées par des estampages (15) en forme de queue d'aronde du logement (16) de la garniture (11).

7. Fermeture selon la revendication 5 ou 6, caractérisée en ce que le logement (16) présente au moins deux gorges d'arrêt.

8. Fermeture selon la revendication 7, caractérisée en ce que deux gorges d'arrêt sont disposées à proximité de l'ouverture (12) de la fente d'arrêt (3).

9. Fermeture selon une des revendications 1 à 8, caractérisée en ce que les épaulements (17, 18) ont la forme de brides.

10. Fermeture selon une des revendications 1 à 9, caractérisée en ce que la largeur (b) de la fente d'arrêt (3) dans la zone des ergots d'arrêt correspond à peu près à 0,9 fois l'épaisseur (d) des branches des maillons de chaîne (9) du tronçon de chaîne de tension (10).

11. Fermeture selon une des revendications 1 à 10, caractérisée en ce que la profondeur (T) de la fente d'arrêt (3) est égale à 2 à 2,5 fois l'épaisseur (d) des branches des maillons de chaîne (9) du tronçon de chaîne de tension (10).

12. Fermeture selon une des revendications 1 à 11, caractérisée en ce que la largeur (B) de la fente d'arrêt (3) à l'extérieur de la zone des ergots d'arrêt est environ égale à 1,2 à 1,4 fois l'épaisseur (d) des branches des maillons de chaîne (9) du tronçon de chaîne de tension (10).

13. Fermeture selon une des revendications 1 à 12, caractérisée en ce que le rayon de courbure $(R_A)$ des ergots d'arrêt (13, 14) tourné vers le fond de la fente d'arrêt (3) est plus grand que le rayon de courbure $(R_D)$ tourné vers l'orifice de passage (2).

14. Fermeture selon la revendication 13, caractérisée en ce que le rayon de courbure $(R_A)$ tourné vers le fond de la fente d'arrêt (3) est égal à la moitié de l'épaisseur (d) et que le rayon de courbure $(R_D)$ tourné vers l'orifice de passage (2) est égal à un tiers de l'épaisseur (d) des branches des maillons de chaîne (9) du tronçon de chaîne de tension (10).

15. Fermeture selon l'une des revendications 1 à 14, caractérisée en ce que la hauteur la plus grande (H) de la garniture (11) correspond à environ 1, 3 fois à la hauteur (h) du corps de base (1) de la fermeture.

16. Fermeture selon la revendication 15, caractérisée en ce que la hauteur (h) du corps de base (1) est égale à l'épaisseur (d) des branches des maillons de chaîne (9) du tronçon de chaîne de tension (10).

17. Fermeture selon la revendication 15 ou 16, caractérisée en ce que la hauteur (H) de la garniture (11) diminue vers l'ouverture (12) de la fente d'arrêt (3).

18. Fermeture selon une des revendications 1 à 14, caractérisée en ce que la hauteur la plus grande (H) de la garniture (11) est au moins égale à une fois et demie et au maximum à deux fois l'épaisseur (d) des branches des maillons de chaîne (9) du tronçon de chaîne de tension.

19. Fermeture selon une des revendications 1 à 18, caractérisée en ce que la garniture (11) est pourvue, dans la zone de l'ouverture (12) de la fente d'arrêt (3), d'entailles de dégagement (19) pour les ergots d'arrêt (13, 14).

20. Fermeture selon une des revendications 1 à 19, caractérisée en ce que le garniture (11) est d'une couleur qui se distingue de la couleur du corps de base (3).

21. Fermeture selon la revendication 20, caractérisée en ce que la garniture (11) est en matériau réflecteur.

22. Fermeture selon une des revendications 1 à 20, caractérisée en ce que la garniture (11) est réalisée fluorescente.

Fig. 1

Fig. 3

Fig. 2

Fig. 4

Fig. 5

Fig.6

Fig.7